# FASCICULE DE BREVET EUROPEEN

(11) **EP 0 406 167 B1**
(45) Date de publication et mention de la délivrance du brevet: **06.04.1994**
(21) Numéro de dépôt: 90810458.1
(22) Date de dépôt: 21.06.1990
(51) Int. Cl.: G05B 19/29

(54) **Dispositif de commande d'un élément enroulable entraîné par un moteur**
Steuerungsvorrichtung von einem durch einen Motor angetriebenen Rollelement
Control device of a roll element driven by a motor

(30) Priorité: 30.06.1989 FR 8908809
(43) Date de publication de la demande: 02.01.1991
(73) Titulaire: SOMFY, F-74300 Cluses (FR)
(72) Inventeur: Sudron, Serge, F-74300 Cluses (FR)
(74) Mandataire: Meylan, Robert Maurice

(56) Documents cités:
- EP-A- 0 294 918
- WO-A-86/04382

## Description

L'invention a pour objet un dispositif de commande d'un élément enroulable susceptible de se déplacer entre deux positions extrêmes et entraîné par un moteur muni d'un codeur de position permettant de connaître à tout instant la position de l'élément enroulable, comprenant des moyens de commande du moteur constitués d'un codeur linéaire comportant un curseur, d'une unité logique de traitement enregistrant la position du curseur et d'une interface, et des moyens d'étalonnage destinés à faire correspondre la course du curseur à la course de l'élément enroulable entre deux positions, moyens constitués de deux contacts d'étalonnage permettant de placer l'unité logique de traitement en état d'étalonnage et de mémoriser les deux positions de l'élément enroulable et deux contacts de réglage permettant d'amener l'élément enroulable dans les deux positions que l'on désire mémoriser.

Dans les dispositifs connus de ce genre, tel que celui fabriqué par la Firme TOSHIBA, le boîtier de commande présente, à côté du codeur linéaire, une rangée de quatre contacts distincts dont deux contacts de mise en état d'étalonnage de l'unité logique de traitement et deux contacts de réglage. Pour procéder à l'étalonnage d'une position du dispositif, la position haute par exemple, il faut successivement actionner le contact d'étalonnage correspondant à la position "haut", placer le curseur dans la position haute afin de prévenir tout mouvement non désiré de l'élément enroulable en fin d'étalonnage, agir sur le contact de réglage de la position "haut", jusqu'à ce que l'élément enroulable soit à cette position, puis actionner à nouveau le contact d'étalonnage "haut" pour remettre l'unité logique de traitement en état de commande du moteur. Un tel enchaînement d'opérations n'est pas évident pour l'utilisateur et il est source d'erreurs. Si, par exemple, l'utilisateur omet d'effectuer la dernière opération consistant à actionner le contact d'étalonnage, le dispositif de commande ne répondra pas à un ordre donné au moyen du codeur linéaire. Dans tous les cas un témoin lumineux est nécessaire pour avertir l'utilisateur que le dispositif se trouve en état d'étalonnage, mais ce témoin peut s'avérer insuffisant.

La présente invention a pour but de simplifier les opérations d'étalonnage et d'éliminer les risques d'erreurs et d'inexécution d'une commande.

Le dispositif de commande selon l'invention est caractérisé en ce que les contacts d'étalonnage sont agencés de telle manière qu'ils sont respectivement actionnés par le curseur lorsque ce dernier est à l'une ou l'autre des extrémités de sa course.

Les contacts d'étalonnage, plus précisément de mise en état d'étalonnage de l'unité logique de traitement, n'étant activés que lorsque le curseur est en fin de course, dès que le curseur quitte les extrêmités de sa course, l'unité logique de traitement revient dans le mode de commande du moteur, sans qu'il soit nécessaire d'actionner un contact particulier. Une signalisation du mode "étalonnage" n'est plus nécessaire.

Selon un mode de réalisation, l'accès aux commandes d'étalonnage est interdit par un cache amovible fixé sur le boîtier de commande.

Deux formes d'exécution de l'invention seront décrites, à titre d'exemple, en relation avec le dessin annexé dans lequel :

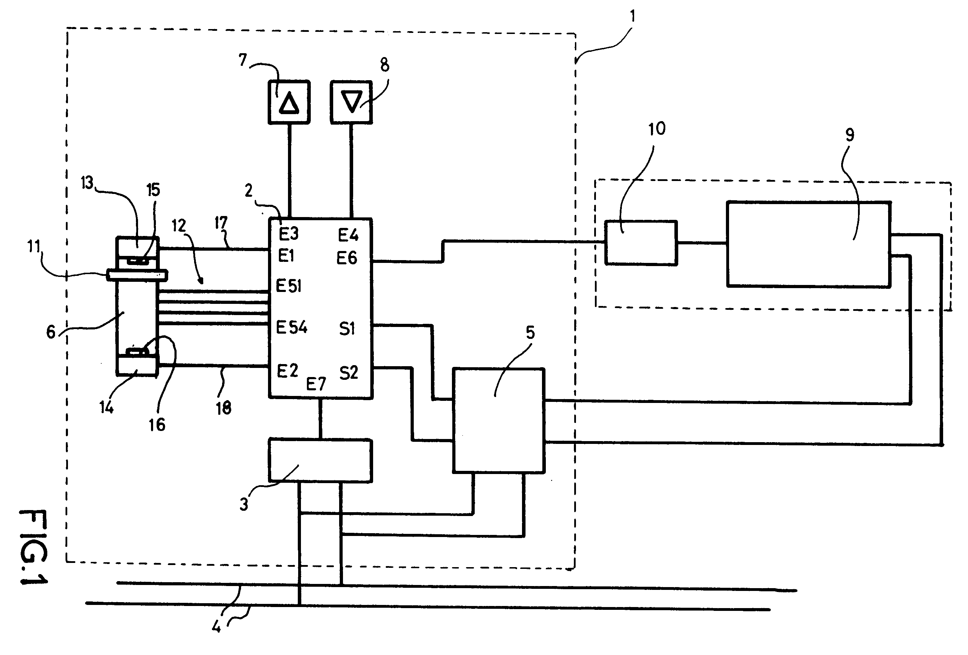

La figure 1 représente schématiquement une première forme d'exécution;
La figure 2 est une vue de face du boîtier du dispositif de commande selon la première forme d'exécution;
La figure 3 est une vue partielle, schématique, d'une seconde forme d'exécution.

Le dispositif de commande comprend, dans un boîtier 1, une unité logique de traitement 2, un circuit d'alimentation basse tension 3 relié au secteur 4, une interface de puissance 5, un codeur linéaire 6, un premier bouton-poussoir 7 actionnant le contact de "montée" à action momentanée et un second bouton-poussoir 8 actionnant un contact de "descente" à action momentanée. Le dispositif commande un moteur électrique 9 à deux bobinages permettant sa rotation dans deux sens différents pour dérouler, respectivement enrouler un élément enroulable, tel qu'un store ou un volet roulant. Ce moteur comporte à l'extrémité de l'axe de son rotor, un codeur à disque 10 prévu pour émettre des impulsions électriques en relation avec la rotation du moteur. De tels codeurs sont connus et se trouvent sur le marché.

L'unité logique de traitement 2 est constitué d'un microprocesseur muni d'entrées E1 à E7 et de sorties S1 et S2, comme dans l'art antérieur.

Le codeur linéaire 6 comporte un curseur 11 se déplaçant sur des pistes conductrices, par exemple au nombre de trois, de manière à établir successivement des combinaisons de contacts reliés par des lignes 12 à l'unité logique de traitement 2. Aux extrémités du codeur linéaire 6 sont disposés deux contacts 13 et 14 actionnables par le curseur par l'intermédiaire de poussoirs 15, respectivement 16. Ces contacts sont reliés à l'unité logique de traitement 2 par des lignes 17 et 18, respectivement aux entrées E1 et E2.

Les fonctions de l'unité logique de traitement (ULT) 2 sont les suivantes :

Lorsque le curseur 11 est à l'une des extrémités de sa course et actionne l'un des interrupteurs 13 ou 14, l'ULT transmet l'ordre de rotation donné au moyen de l'un des contacts 7 ou 8 au moteur et elle lit la position du moteur au moyen du codeur 10.

Lorsque le curseur 11 quitte les extrémités du codeur linéaire 6, l'ULT 2 mémorise les positions correspondantes du moteur 9 à ces instants. Elle affecte en outre aux combinaisons de contacts, des positions du moteur, ces positions étant régulièrement distribuées entre les deux dernières positions mémorisées.

Lorsque le curseur 11 n est pas à l'une des extrémités du codeur linéaire 6, l'ULT 2 lit la position du moteur 9 sur le codeur et compare cette position à celle du curseur 11 et, au besoin, donne un ordre au moteur 9 de sorte que sa position rejoingne la position homothétique de celle du curseur 11.

Le dispositif de commande s,utilise de la manière suivante : Lorsque l'utilisateur désire étalonner le dispositif de commande en fonction de la position de l'élément enroulable entraîné par le moteur 9, il amène le curseur 11 du codeur linéaire à l'une des extrémités de sa course de façon à actionner l'un des contacts 13 ou 14, par exemple le contact 13. L'ULT 2 se met alors en état d'étalonnage et lit en permanence la position du moteur 9. A l'aide des contacts 7 et 8, l'utilisateur commande l'un ou l'autre des sens de rotation du moteur 9 de manière à amener l'élément enroulable à l'une de ses positions souhaitées, puis, cette position étant atteinte, l'utilisateur écarte le curseur 11 du contact 13 en l'amenant sur la première position de codage du codeur linéaire. L'ouverture du contact 13 entraîne instantanément la mémorisation de la position du curseur 11. Cette position étant la position effective de l'élément enroulable à cet instant, ce dernier n'est pas actionné.

L'utilisateur procède de manière analogue pour déterminer la seconde position, en amenant le curseur 11 à l'autre extrémité du codeur linéaire 6 de manière à actionner le contact 14. L'élément enroulable est amené dans sa seconde position désirée au moyen des interrupteurs 7 et 8. Cette position étant atteinte, il suffit d'écarter le cuseur 11 du contact 14 pour mémoriser cette position du curseur correspondant à la seconde position extrême de l'élément enroulable.

Dès que les interrupteurs 13 et 14 ne sont plus actionnés, l'ULT 2 passe instantanément à nouveau dans le mode "commande" et l'élément enroulable prend la position homothétique de celle du curseur 11.

L'étalonnage est ainsi réalisé d'une manière très simple en agissant uniquement sur le curseur du codeur linéaire et sur les contacts d'étalonnage, et aucun mouvement non souhaité de l'élément enroulable ne peut se produire.

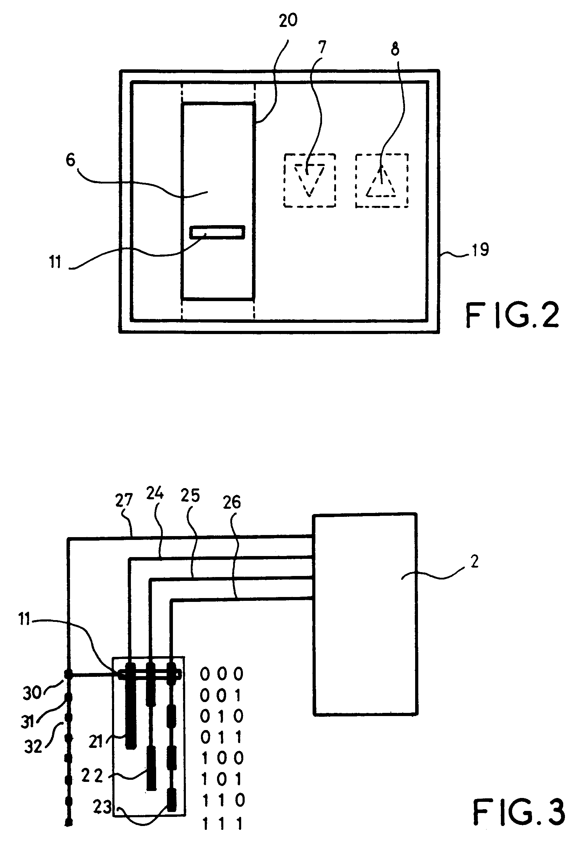

De manière à augmenter la sécurité du dispositif de commande, le boîtier du dispositif peut être couvert d'un cache amovible 19 (figure 2) recouvrant les contacts de commande de réglage 7 et 8 ainsi que les contacts 13 et 14 et leurs poussoirs d'actionnement 15 et 16 en ne laissant apparaître, à travers une fenêtre rectangulaire 20, que la partie du codeur linéaire 6 utilisée pour la commande de l'élément enroulable. Le cache 19 est bien entendu enlevé pour procéder à l'étalonnage puis remis en place une fois l'étalonnage effectué. L'utilisateur n'a donc plus accès aux fonctions d'étalonnage, mais seulement aux fonctions de commande du moteur, ce qui évite tous risques de désétalonnage par un utilisateur occasionnel non averti.

Un second mode d'exécution est représenté partiellement à la figure 3. On a représenté uniquement l'unité logique de traitement 2 et le codeur 6. Les autres éléments du dispositif sont identiques à ceux de la première forme d'exécution. On a représenté cette fois schématiquement trois pistes conductrices 21, 22 et 23 du codeur linéaire 6. Ces pistes sont constituées de segments conducteurs sur lesquels glisse le curseur 11. Ces pistes sont reliées individuellement et respectivement à l'ULT 2 par des conducteurs 24, 25 et 26. Le curseur 11 se déplace en outre sur un certain nombre de bornes conductrices 30, 31, 33 etc. correspondant aux positions pour lesquelles le curseur établit une combinaison de contacts distincts. Ces bornes de contact sont reliées à l'ULT 2 par une ligne 27. A droite du codeur linéaire 2, on a inscrit le codeur binéaire correspondant à chacune des positions du curseur 11. le nombre de pistes et de positions n'est bien entendu donné qu,à titre d'exemple. La première et la dernière positions du curseur, pour lesquelles le code est respectivement 000, 111, sont les positions de mise en état d'étalonnage de l'unité logique de traitement 2. Ce mode d'exécution est donc particulièrement économique. Le boîtier de commande peut bien entendu être également muni d'un cache 19 recouvrant les positions extrêmes du curseur et empêchant de les atteindre.

L'invention n'est pas limitée aux deux formes d'exécution décrites mais les contacts de mise en état d'étalonnage pourraient être réalisés et actionnés de manière différente. Selon une première variante, l'un des éléments de contact pourrait être constitué d'un élément de contact additionnel situé sur le curseur et venant établir un contact avec un élément de contact fixe à chacune des extrémités de la course du curseur. Selon une autre variante, le curseur pourrait porter deux paires d'éléments de contact actionnés par des butées prévues à chacune des extrémités de la course du curseur.

## Revendications

1. Dispositif de commande d'un élément enroulable susceptible de se déplacer entre deux positions extrêmes et entraîné par un moteur (9) muni d'un codeur de position (10) permettant de connaître à tout instant la position de l'élément enroulable, comprenant des moyens de commande du moteur constitués d'un codeur linéaire (6) comportant un curseur (11), d'une unité logique de traitement enregistrant la position du curseur et d'une interface (5), et des moyens d'étalonnage destinés à faire correspondre la course du curseur à la course de l'élément enroulable entre deux positions, moyens constitués de deux contacts d'étalonnage (13, 14) permettant de placer l'unité logique de traitement (2) en état d'étalonnage et de mémoriser les deux positions de l'élément enroulable et de deux contacts de réglage (7, 8) permettant d'amener l'élément enroulable dans les deux positions que l'on désire mémoriser, caractérisé en ce que les contacts d'étalonnage (13, 14; 21, 22, 23) sont agencés de telle manière qu'ils sont respectivement actionnés par le curseur (11) lorsque ce dernier est à l'une ou l'autre des extrémités de sa course.

2. Dispositif de commande selon la revendication 1, dans lequel le codeur linéaire comporte des pistes conductrices (21, 22, 23) sur lesquelles glisse le curseur (11), caractérisé en ce que les contacts d'étalonnage sont constitués par le curseur et les extrémités des pistes du codeur linéaire.

3. Dispositif de commande selon la revendication 1, caractérisé en ce que les contacts d'étalonnage sont constitués respectivement par un élément de contact situé sur le curseur et un élément de contact situé à chacune des extrémités de la course du curseur.

4. Dispositif de commande selon la revendication 1, caractérisé par le fait que les contacts d'étalonnage sont constitués chacun d'une paire d'éléments de contact monté sur le curseur et dont l'un est mobile, et d'une butée à l'une des extrémités de la course du curseur, butée actionnant l'élément de contact mobile pour fermer le contact d'étalonnage.

5. Dispositif de commande selon l'une quelconque des revendications 1 à 4, comprenant un boîtier sur la face duquel apparaissent le curseur et les contacts de réglage, caractérisé en ce que le boîtier est muni d'un cache amovible recouvrant les positions extrêmes du curseur et les contacts de réglage.

## Patentansprüche

1. Vorrichtung zum Steuern eines aufrollbaren Elements, das sich zwischen zwei Endstellungen verschieben kann und von einem Motor (9) angetrieben wird, welcher mit einem Positionscodierer (10) versehen ist, der in jedem Zeitpunkt die Stellung des aufrollbaren Elements zu kennen erlaubt, mit Mitteln zum Steuern des Motors, welche aus einem mit einem Läufer (11) versehenen linearen Codierer (6), einer logischen Verarbeitungseinheit, welche die Stellung des Läufers registriert, und einem Interface (5) bestehen, und mit Eichmitteln, die dazu bestimmt sind, den Weg des Läufers mit dem Weg des zwischen zwei Stellungen aufrollbaren Elements in Uebereinstimmung zu bringen, wobei diese Mittel aus zwei Eichkontakten (13, 14), die die logische Verarbeitungseinheit (2) in den Eichzustand zu schalten und die beiden Stellungen des aufrollbaren Elements zu speichern erlauben, und aus zwei Einstellkontakten (7, 8) bestehen, welche das aufrollbare Element in die beiden Stellungen zu bringen erlauben, die man zu speichern wünscht, dadurch gekennzeichnet, dass die Eichkontakte (13, 14; 21, 22, 23) dazu eingerichtet sind, dass sie jeweils durch den Läufer (11) betätigt werden, wenn sich dieser am einen oder am anderen Ende seines Weges befindet.

2. Steuervorrichtung nach Anspruch 1, in welcher der lineare Codierer leitende Spuren (21, 22, 23) aufweist, auf denen der Läufer (11) gleitet, dadurch gekennzeichnet, dass die Eichkontakte aus dem Läufer und den Enden der Spuren des linearen Codierers gebildet werden.

3. Steuervorrichtung nach Anspruch 1, dadurch gekennzeichnet, dass die Eichkontakte jeweils aus einem Kontaktelement, das auf dem Läufer angeordnet ist, und einem Kontaktelement, das an jedem der Enden des Weges des Läufers angeordnet ist, bestehen.

4. Steuervorrichtung nach Anspruch 1, dadurch gekennzeichnet, dass die Eichkontakte jeder aus einem Paar von Kontaktelementen, die auf dem Läufer montiert sind und von denen eines beweglich ist, und aus einem Anschlag an einem der Enden des Weges des Läufers bestehen, wobei dieser Anschlag das bewegliche Kontaktelement betätigt, um den Eichkontakt zu schliessen.

5. Steuervorrichtung nach einem der Ansprüche 1 bis 4, mit einem Gehäuse, auf dessen Vorderseite der Läufer und die Einstellkontakte erscheinen, dadurch gekennzeichnet, dass das Gehäuse mit einer losen Abdeckung versehen ist, welche die Endstellungen des Läufers und die Einstellkontakte abdeckt.

## Claims

1. Device for controlling a windable element capable of moving between two end positions and driven by a motor (9) provided with a position encoder (10) enabling the position of the windable element to be known at any instant, comprising means for controlling the motor which consist of a linear encoder (6) comprising a slider (11), a logic processing unit recording the position of the slider and an interface (5), and calibration means intended to make the travel of the slider correspond to the travel of the windable element between two positions, which means consist of two calibration contacts (13, 14) enabling the logic processing unit (2) to be placed in calibration state and the two positions of the windable element to be stored, and two adjusting contacts (7, 8) enabling the windable element to be brought into the two positions which it is desired to store, characterized in that the calibration contacts (13, 14; 21, 22, 23) are arranged in such a way that they are respectively activated by the slider (11) when the latter is at one or other of the ends of its travel.

2. Control device according to Claim 1, in which the linear encoder comprises conducting tracks (21, 22, 23) on which the slider (11) slides, characterized in that the calibration contacts are made up from the slider and the ends of the tracks of the linear encoder.

3. Control device according to Claim 1, characterized in that the calibration contacts are respectively made up from a contact element situated on the slider and a contact element situated at each of the ends of the travel of the slider.

4. Control device according to Claim 1, characterized in that the calibration contacts are each made up of a pair of contact elements mounted on the slider and one of which is movable, and of a stop at one of the ends of the travel of the slider, which stop activates the movable contact element in order to close the calibration contact.

5. Control device according to any one of Claims 1 to 4, comprising a box on whose face the slider and the adjusting contacts emerge, characterized in that the box is provided with a removable cover covering the end positions of the slider and the adjusting contacts.
